# EUROPEAN PATENT APPLICATION

(11) **EP 2 792 879 A2**
(43) Date of publication of application: **22.10.2014**
(21) Application number: 14164661.2
(22) Date of filing: 15.04.2014
(51) Int. Cl.: F03D 11/00

(54) **Wind power generation system**

(30) Priority: 15.04.2013 JP 2013084457
(71) Applicant: Hitachi Ltd., Tokyo 100-8280 (JP)
(72) Inventor: Funabashi, Shigehisa, Tokyo, 100-8280 (JP); Inamura, Shingo, Tokyo, 100-8280 (JP); Shigenaga, Yasushi, Tokyo, 100-8280 (JP); Saeki, Mitsuru, Tokyo, 100-8280 (JP)
(74) Representative: MERH-IP Matias Erny Reichl Hoffmann

(57) **Abstract**

Provided is a wind power generation system that is less likely to change its cooling performance depending on the wind direction (W). In order to solve the above problem, the windpower generation system of the invention includes blades (1) adapted to rotate upon receiving wind, a generator (5) for performing a power generating operation by rotating a rotor (2) together with rotation of the blades, a nacelle (6) for supporting the blades (1) via a main shaft (3), a tower (7) for rotatably supporting the nacelle (6), a power conditioning system (8) or transformer (9) accommodated in the tower (7), and a plurality of radiators (13) disposed on an outer peripheral side of the tower (7) for cooling the power conditioning system (8) or the transformer (9). The radiators (13) positioned substantially at the same height are arranged at substantially equal intervals in a circumferential direction of the tower (7).

## Description

### FIELD OF THE INVENTION

The present invention relates to a wind power generation system that cools internal devices therein using natural wind.

### BACKGROUND OF THE INVENTION

Normally, wind power generation systems include a nacelle for supporting a rotor to be rotated by blades, via a main shaft for the blades at an upper part of a tower. Most of nacelles include therein a generator to be rotated by the rotation of the main shaft of the blades. In order to obtain the preferable number of revolutions of the generator, some nacelles include a gear box disposed between the rotor and the generator to increase the number of revolutions. An electric energy generated by the generator is converted into electric power to be supplied to a power system via a power conditioning system or transformer.

Devices including a generator, a gear box, a power conditioning system, a transformer, and the like are incorporated in the wind power generation system, which generate heat as a loss of the device. For this reason, a cooling system is required to diffuse the generated heat to allow the devices to operate at appropriate temperature. In many cases, a system using a heat radiator (radiator) or a fan is finally used to diffuse heat into atmosphere or water outside the wind power generation system. For example, Patent Document 1 discloses a cooling system without using a fan as a movable portion. The above patent document describes "a passive radiator for dissipating heat from a transformer is installed outside a wind power generation system, so that outside air is brought into contact with the passive radiator, thereby cooling the power generation facility". The same patent document also describes "a plurality of radiators are arranged in different directions outside the wind power generation system", taking into consideration changes in wind direction.

### [Related Art Documents]

### [Patent Documents]

[Patent Document 1] Japanese Unexamined Patent Publication No. 2012-102692

As mentioned above, Patent Document 1 discloses the invention relating to cooling of the transformer using natural wind. However, the arrangement of devices should be further considered. That is, only the provision of a plurality of radiators without considering the arrangement thereof can lead to fluctuations in cooling performance according to the wind direction. Accordingly, it is an object of the invention to provide a wind power generation system that is less likely to change its cooling performance depending on the wind direction.

### SUMMARY OF THE INVENTION

In order to solve the above problem, a wind power generation system according to the invention includes blades adapted to rotate upon receiving wind, a generator for performing a power generating operation by rotating a rotor together with rotation of the blades, a nacelle for supporting the blades via a main shaft, a tower for rotatably supporting the nacelle, a power conditioning system or transformer accommodated in the tower, and/or a plurality of radiators disposed on an outer peripheral side of the tower for cooling the power conditioning system or the transformer. The radiators positioned substantially at the same height are arranged at substantially equal intervals in a circumferential direction of the tower.

According to the invention, the wind power generation system can be provided which is less likely to change its cooling performance depending on the wind direction.

### BRIEF DESCRIPTION OF THE DRAWINGS

Fig. 1 is a schematic diagram showing a wind power generation system installed above the sea according to a first embodiment of the invention;
Fig. 2 is a schematic perspective view of a radiator installation portion of the wind power generation system in the first embodiment;
Figs. 3A, 3B, and 3C are horizontal cross-sectional views of a tower and a radiator for explaining the effects of the arrangement of the radiators in the invention;
Fig. 4 is a graph of the comparison of average values of components of flow velocity vectors of wind in the normal direction with respect to a radiator surface;
Fig. 5 is a configuration diagram of a coolant flow path of the radiators in the wind power generation system of the first embodiment;
Fig. 6 is a schematic perspective view of a radiator installation portion of a wind power generation system according to a second embodiment; and
Fig. 7 is a configuration diagram of a coolant flow path of radiators in a wind power generation system according to a third embodiment.

### DETAILED DESCRIPTION OF THE PREFERRED EMBODIMENTS

In the following, preferred embodiments of the invention will be described with reference to the accompanying drawings.

### [First Embodiment]

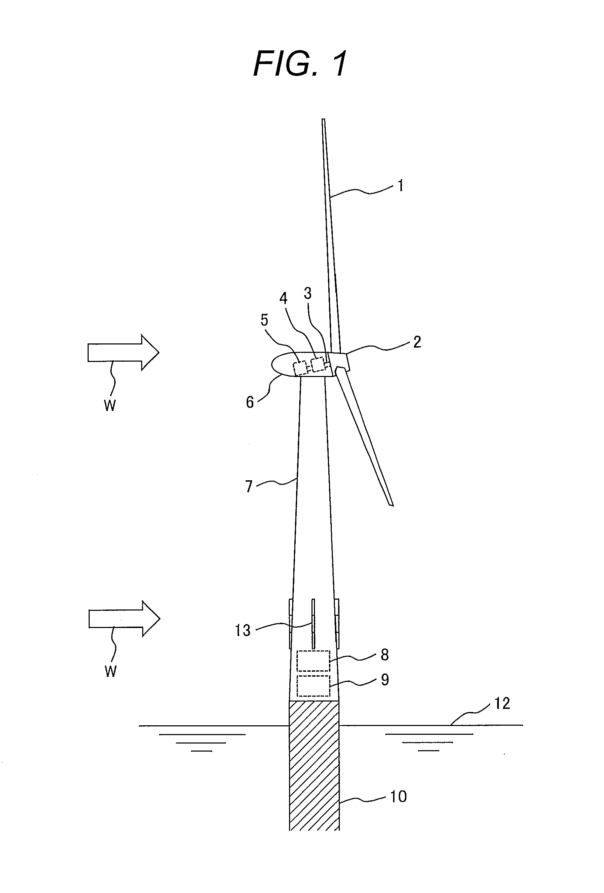

A first embodiment of the invention will be described below using Figs. 1 to 5. Fig. 1 shows a schematic diagram of a wind power generation system installed offshore in the first embodiment. The wind power generation system includes a nacelle 6 placed at the top of a tower 7 installed to protrude offshore from under the sea level. The nacelle 6 pivotally supports blades 1 and a rotor 2 with a hub (not shown). The rotor 2 is connected to a generator 5 via a main shaft 3 and further a gear box 4. The generator 5 is connected to electric components, including a power conditioning system 8 and a transformer 9 incorporated under the tower 7 by a power cable (not shown).

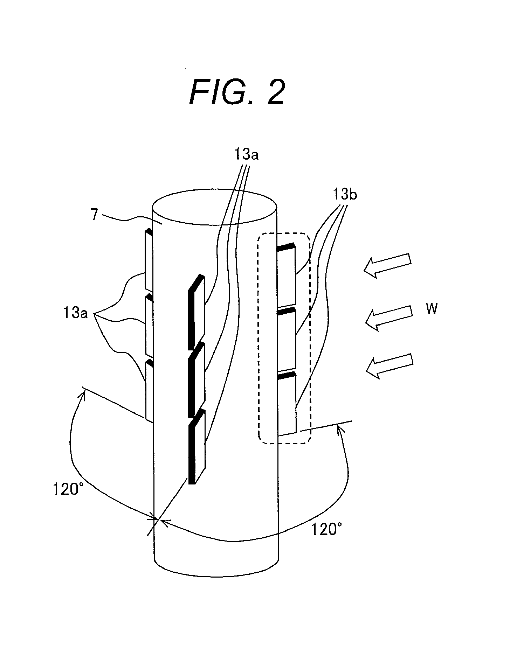

The wind power generation system uses a coolant into which a long life coolant is mixed as a cooling medium for cooling the power conditioning system 8. A plurality of radiators 13 for guiding the coolant are supported by the tower 7 located in positions at a lower level than the lowermost end of the blade 1 of a wind turbine at the time of rotation. Fig. 2 shows a schematic perspective view of an installation portion of the radiators 13 of the wind power generation system in this embodiment. As shown in Fig. 2, radiators 13a and 13b are distributed in three directions substantially every 120° along the circumferential direction of the tower 7. Further, the three radiators are arranged longitudinally in one circumferential direction. Provided that the radiators 13a are parts effective for cooling in the direction away from the wind direction, the radiators 13b are parts oriented in the same direction as the wind direction (which does not means that the radiators 13b do not completely contribute to the cooling), and not contributing to cooling (ineffective parts).

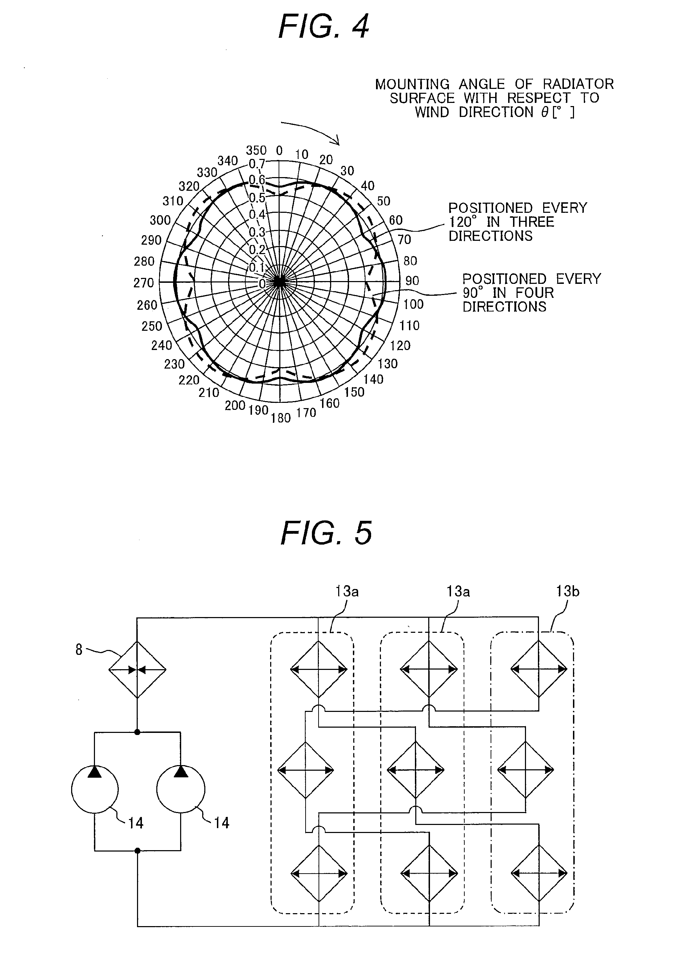

The coolant flow paths of the radiators 13a and 13b include a mixture of parts for connecting the radiators 13a and 13b in series and parts for connecting the radiators 13a and 13b in parallel. A group of the radiators connected in series are distributed in the circumferential direction of the tower 7. This point will be described later using Fig. 5.

Next, the operation of the wind power generation system in this embodiment will be described. In the wind power generation system, the nacelle 6 rotates (under yaw control) such that a rotation surface of the rotor 3 is oriented in the wind direction W, and the blades 1 receive a force given by the wind energy, causing the rotor 3 to rotate. The wind power generation system shown in Fig. 1 is a downwind type wind power generation system that operates with the rotor 3 positioned on the downstream side of the tower 7. The rotation of the rotor 3 is accelerated up to the number of revolutions appropriate for the generator 5 via the gear box 4, and then transferred to the generator 5. The electric energy generated by rotation of the generator 5 is rectified by the power conditioning system 8 with its voltage adjusted by the transformer 9 to be fed to the power system. At this time, the losses of electric energy is produced by the current flowing through the generator 5, the power conditioning system 8, the transformer 9, and the like to thereby generate heat. Also, the energy loss produced through the gear box 4 leads to the generation of heat.

In the wind power generation system of this embodiment, a water cooling system to which the invention is applied is used for cooling the power conditioning system 8. That is, the coolant is circulated by a pump through between the power conditioning system 8 and the radiators 13, and the heat drawn by the power conditioning system 8 is transferred to the outside of the tower 7 to be dissipated to the outside air, whereby the wind power generation system is cooled. The application of the invention is not limited to the water cooling system.

Each of the radiators 13 is placed in the position at a lower level than the lowermost end of the blade 1 during rotation, which can avoid the influences on the power generation capability of the wind power generation system and the load fluctuation on the blades 1 via the flow of wind. In contrast, the velocity of wind becomes low in a position at a lower level than an upper air where the center of the rotor 3 and the nacelle 6 are positioned, and therefore in order to obtain the desired cooling performance, it is very important to effectively supply the air required for cooling to the radiators 13.

The radiators 13 are cooled by natural wind flowing outside. However, the natural wind W does not keep its direction constant, whereby only by providing the radiator 13 in one direction, the air (wind) required for the radiator 13 cannot be sufficiently supplied depending on the wind direction W. Thus, a desired cooling performance can hardly be obtained. Unlike the nacelle 6, normally, the radiators 13 are fixed to the tower 7 and do not perform yaw control along the wind direction W, which easily change the cooling performance of the radiators depending on the wind direction W. For this reason, a plurality of radiators 13 need to be provided in different directions.

In this embodiment, the radiators 13 are arranged at substantially equal intervals in the circumferential direction of the tower 7 having a substantially cylindrical shape so as to achieve the stable cooling performance with respect to any wind direction. As a result of considering suppression of cost increase, the desirable arrangement of the radiators 13 which achieves the minimum cost among possible arrangements of the radiators includes positioning the radiators substantially every 120° in three directions.

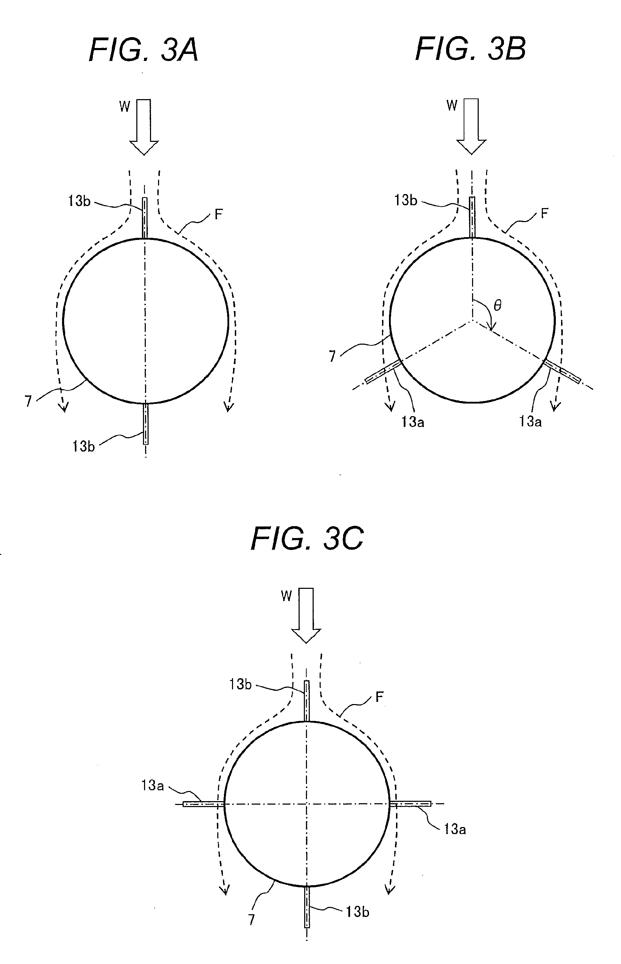

Figs. 3A, 3B, and 3C show horizontal cross-sectional views of the tower 7 and the radiators 13a and 13b for explaining the effects of the arrangement of the radiators 13 in the invention. As shown in Fig. 3A, the arrangement of the radiators, for example, substantially every 180° in two directions cannot handle the wind in the direction parallel to the surface of the radiator 13b. As compared to the case where one radiator is disposed only in one direction, even the above arrangement of the radiators at equal intervals in two directions can reduce a change in cooling performance with respect to the wind direction, and is unlikely to change its cooling performance. More preferably, the arrangement of the radiators in three or more different directions along the circumferential direction is desirable when taking into consideration the wind direction parallel to the surface of the radiator 13b.

As shown in Fig. 3C, in the arrangement of the radiators substantially every 90° in four directions, the two radiators 13a oriented in two directions and facing the wind direction can receive the sufficient wind to exhibit good cooling performance, while the two remaining radiators 13b oriented in other two directions can hardly be expected to exhibit the adequate cooling effect. In contrast, as shown in Fig. 3B, in the arrangement of the radiators every 120° in three directions, the radiators 13a that can be expected to exhibit a certain cooling performance for any wind directions exist in two different directions while minimizing the action of the radiator 13b not contributing to the cooling in the worst state.

Fig. 4 shows a graph of the comparison of average values of components of flow velocity vectors of wind in the normal direction with respect to a radiator surface. Specifically, Fig. 4 illustrates the comparison in changes in average values of the components of the flow velocity vectors of wind in the normal direction with respect to the radiator surface between the arrangement of the three radiators every 120° in the three directions and the arrangement of the four radiators every 90° in the four directions. Each of the values shown in the graph shows a ratio of the value of the component of the wind flow velocity vector to the value obtained when the flow velocity vector of the wind is identical to the normal line vector of the radiator surface (that is, when the radiator surface is oriented in the wind direction). The value simply results in the level of a volume of the air passing through the radiator (while neglecting the influence of the shadow of the tower, the flow separation of the air, and the like), and indicates whether the radiators installed are effectively utilized or not. As can be seen from Fig. 4, at the substantially same height of the graph, the arrangement of the radiators every 120° in the three directions achieves small fluctuations in height with respect to the wind direction as compared to the arrangement of the radiators every 90° in the four directions. Thus, the three-directional arrangement has an advantage in stable cooling regardless of the wind direction over the four-directional arrangement. Further, the three-directional arrangement can decrease the number of installed radiators, and thus has good cost performance as compared to the four-directional arrangement.

Fig. 5 shows the configuration of coolant flow paths of the radiators 13a and 13b in the wind power generation system of this embodiment (valve and sensor not shown). The coolant flow paths include three flow paths arranged in parallel, each flow path including three radiators 13a and 13b connected in series. The radiators connected in series of each flow path distribute the directions of the radiators to three directions, so that each flow path passes through the corresponding radiator oriented in each direction. That is, the coolant flowing through the three radiators in series is allowed to pass through the radiators (at least) one by one, arranged in the different directions (in the respective different directions, especially in each of three directions in this case). With this arrangement, even when only the two-directional radiators 13a can be expected to exhibit the cooling performance according to the wind direction, each of all three parallel flows of coolant passes through the two radiators 13a that can be expected to have the cooling performance, and the one radiator 13b that cannot be expected to have the cooling performance because of insufficient wind flowing therein. Thus, the respective coolants flowing through the three parallel flow paths dissipate heat therefrom in a well-balanced manner, which can exhibit the cooling effect without being influenced by the wind direction. The respective series flow paths are formed such that the coolant flows through the radiators at least one by one in the respective different directions, so that the high stable cooling performance can be expected regardless of the wind direction. Alternatively, even though the coolant does not pass through the radiators at least one by one in the respective different directions, as long as the refrigerant flow path is connected in series to another refrigerant flow path oriented in the different direction with respect to the circumferential direction of the tower, this arrangement can be expected to exhibit the effect of equalizing the change in cooling performance due to fluctuations in wind direction.

When the coolant flows through the radiators connected in series, the coolant located on the downstream side is further cooled to decrease the temperature thereof, which leads to a decrease in difference between the outside air temperature and the coolant on the downstream side to reduce the heat dissipation performance. When the radiators connected in series are provided in the same direction oriented along the circumferential direction of the tower, the radiator installed in one direction allows the sufficient air to be supplied therethrough to exhibit the high heat dissipation performance. Because of the radiator having the high heat dissipation performance, in another radiator on the most downstream side with respect to the coolant flow, the temperature of the coolant might already be so low that there is a little difference between the temperature of the outside air and the temperature of coolant at the most downstream side radiator, which drastically decreases the heat dissipation at the radiator itself. In contrast, in this embodiment of the invention, even in the wind direction that does not expect the radiator in one specific direction to exhibit the cooling performance, the cooling is performed in a well-balanced manner through three parallel flow paths for the coolant, which can avoid the phenomenon that the heat dissipation performance cannot be obtained due to the drastic decrease in a difference in temperature between the outside air and the coolant in any one of the flow paths.

In this embodiment described above, the radiators are arranged in three positions in the height direction and also in three positions in the circumferential direction. As long as a plurality of radiators positioned at the substantially same height are arranged at substantially equal intervals in the circumferential direction of the tower 7, the radiators can be expect to have the effect of suppressing the change in cooling performance depending on the wind direction. The arrangement of the radiators in the invention is not limited to the case where the radiators are located in the three positions in each of the height direction and the circumferential direction.

### [Second Embodiment]

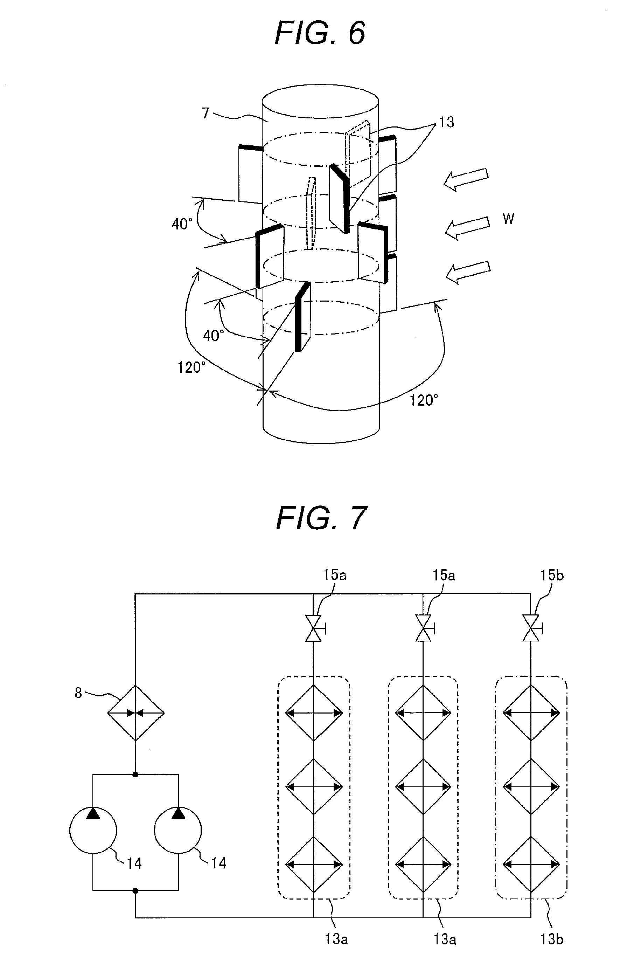

Referring to Fig. 6, a second embodiment of the invention will be described below. In this embodiment, the description of the same parts as those in the first embodiment will be omitted below. Fig. 6 is a schematic perspective view of an installation portion of the radiators 13 in a wind power generation system of this embodiment. Like the first embodiment, the wind power generation system of this embodiment uses nine pieces of the radiators 13 in total arranged every 120° in three directions as well as in three positions in the longitudinal direction. Additionally, each radiator 13 is displaced by substantially 40° as an installation angle in the circumferential direction, in each corresponding installation position in the longitudinal direction in such a manner as to have a staggered form. The displacement by 40° is based on the following reason. When a is the number of the radiators in the circumferential direction and b is the number of the radiators in the height direction, the radiators are displaced from each other by substantially 360°/(a x b) in the circumferential direction, so that the respective radiators are arranged substantially at equal intervals in the circumstantial direction as well as in the height direction, and hence the cooling performance of the radiators is less likely to be changed by the change in wind direction. Here, 40° is an angle calculated when a = 3 and b = 3.

Such arrangement of the radiators can further enhance the robustness of the cooling performance with respect to the wind direction because of different directions of installation of the respective radiators 13. Further, in the respective level groups in the longitudinal direction, that is, in an upper-level group of radiators, an intermediate-level group of radiators, and a lower-level group of radiators, the respective radiators are displaced and arranged in three directions by 120°, which canmake effective use of the respective groups of radiators as mentioned above.

In this embodiment, the radiators positioned not only at the substantially same height, but also at the different heights are arranged substantially at equal intervals. Alternatively, when the radiators at each height are arranged substantially at equal intervals in the circumferential direction of the tower, as long as the radiators are located at a plurality of levels in the height direction and not superimposed on each other in the circumferential direction of the tower, these radiators are less likely to change the cooling performance thereof depending on the wind direction. It is apparent that like this embodiment, the radiators are displaced by substantially 360°/(a x b) from each other in a circumferential direction to have a highly symmetric structure, and thus are much less likely to change the cooling performance thereof according to the wind direction.

### [Third Embodiment]

A third embodiment of the invention will be described below with reference to Fig. 7. Fig. 7 is a configuration diagram of coolant flow paths for the radiators 13a and 13b in a wind power generation system of this embodiment. The structure of this embodiment is substantially the same as that of the first embodiment except that as to the arrangement of the radiators 13a and 13b on the tower, the three radiators in series are arranged in the same relative position in the circumferential direction of the tower, and that valves 15a and 15b are provided to adjust the amount of coolant flowing though each radiator group. In this embodiment, the description of the same components as those in the first embodiment will be omitted below.

When the refrigerant flow paths connected in series are arranged in the same relative position in the circumferential direction of the tower, a difference in temperature between outside air and coolant can become very small on the most downstream side, which leads to reduction in coolingperformance, while can advantageously shorten the length of a coolant pipe. In this embodiment, a wind direction detecting function unit, such as an anemoscope, is mounted as means for ensuring the cooling performance at this time. The wind power generation system performs the control according to the detected wind direction such that in the radiator 13b installed in the direction that hardly receives the wind supplied, a valve 15b is shut to interrupt the inflow of the coolant into the radiator 13b, while in the radiators 13a installed in the direction that easily receives the wind supplied, a valve 15a is opened to feed the coolant in a larger amount into the radiator 13a.

The larger amount of coolant is fed to the radiators 13a that can effectively perform cooling, which increases the flow rate of coolant in the radiator 13a, thereby improving the heat dissipation performance. Further, a heat capacity for coolant flowing per unit time is increased to suppress a decrease in temperature of the coolant even though the heat is dissipated in the same amount, which can ensure a difference in temperature from the outside air, thereby maintaining the heat dissipation performance of the radiator 13a located on the most downstream side.

The embodiments described above are illustrative only, and not intended to limit the contents of the invention. For example, even when a subject of interest to be cooled is one other than the power conditioning system 8, or even when a cooling medium is oil, the use of the same structure and adjustment of flow rate as those of the radiators 13 for dissipating heat therefrom can exhibit the desired effects, and therefore are understood to fall in the scope of the invention. Alternatively, although the above embodiments have referred to the downwind type wind power generation system operated with the rotor 3 located on the downstream side of the tower 7, the invention can be applied to an upwind type wind power generation system operated with a rotor located on an upstream side of a tower.

According to the invention, the wind power generation system can be provided which includes a low-cost effective cooling system with improved robustness with respect to the wind direction by means of the minimum arrangement of the radiators when using radiator cooling with natural wind for cooling components of the wind power generation system. This system for performing the cooling operation with natural wind without using any fanmovable outside a tower can not only improve the energy saving by eliminating power consumption of the fan, but also achieve the necessary cooling performance even in malfunction of the fan, which can reduce risks, including unexpected stop of the wind power generation system or an output limiting operation.

### [Description of Reference Numerals]

- 1: blade
- 2: rotor
- 3: main shaft
- 4: gear box
- 5: generator
- 6: nacelle
- 7: tower
- 8: power conditioning system
- 9: transformer
- 10: foundation
- 12: sea level
- 13: radiator
- 13a: radiator (effective part)
- 13b: radiator (ineffective part)
- 14: water pump
- 15a: valve (open)
- 15b: valve (shut)
- W: direction of natural wind
- F: direction of air

## Claims

1. A wind power generation system, comprising:
blades (1) adapted to rotate upon receiving wind;
a generator (5) for performing a power generating operation by rotating a rotor (2) together with rotation of the blades (1);
a nacelle (6) for supporting the blades (1) via a main shaft (3);
a tower (7) for rotatably supporting the nacelle (6);
a power conditioning system (8) or transformer (9) accommodated in the tower (7); and
a plurality of radiators (13) disposed on an outer peripheral side of the tower (7) for cooling the power conditioning system (8) or the transformer (9),
wherein the radiators (13) positioned substantially at the same height are arranged at substantially equal intervals in a circumferential direction of the tower (7).

2. The wind power generation system according to claim 1,
wherein the radiators (13) are arranged in three or more directions at substantially equal intervals along the circumferential direction of the tower (7).

3. The wind power generation system according to claim 1 or 2,
wherein any one of the radiators (13) is positioned under a lowermost end of the blade during rotation.

4. The wind power generation system according to any one of claims 1 to 3,
wherein the radiators (13) are arranged in three directions substantially at the same height.

5. The wind power generation system according to any one of claims 1 to 4,
wherein the radiators (13) are arranged in a height direction, and
wherein a refrigerant flow path formed in the radiator (13) is connected in series to another refrigerant flow path formed in another radiator (13) arranged in a different direction with respect to the circumferential direction of the tower (7) .

6. The wind power generation system according to claim 5,
wherein the refrigerant flow paths connected in series pass at least one time through the radiator (13) arranged in any direction with respect to the circumferential direction.

7. The wind power generation system according to any one of claims 1 to 6,
wherein the radiators (13) are arranged in the height direction, and
wherein all the radiators (13) are arranged not to be superimposed over each other in the circumferential direction of the tower.

8. The wind power generation system according to claim 7,
wherein the radiators (13) are arranged substantially every 360°/(a x b) in the circumferential direction where a is the number of the radiators (13) arranged in the circumferential direction, and b is the number of the radiators (13) arranged in the height direction.

9. The wind power generation system according to any one of claims 1 to 4,
wherein a flow rate of refrigerant flowing through the radiator is adjustable depending on a wind direction.

10. The wind power generation system according to claim 9,
wherein the flow rate of refrigerant flowing through the radiator (13) disposed on a windward side is adjusted to be larger than that of the refrigerant flowing through the radiator (13) disposed on a leeward side.

11. The wind power generation system according to claim 10, further comprising an anemoscope,
wherein the radiators (13) are arranged in the height direction,
wherein the refrigerant flow path formed in the radiator (13) is connected in series to the refrigerant flow path formed in another radiator in the substantially same direction with respect to the circumferential direction of the tower (7),
wherein each group of the refrigerant flow paths connected in series is provided with a valve for being capable of adjusting a flow rate of the refrigerant flowing through the flow path, and
wherein the valve is adj ustedbased on a result of detection by the anemoscope such that the flow rate of the refrigerant flowing through the radiator (13) disposed on the windward side is larger than that of the refrigerant flowing through the radiator (13) disposed on the leeward side.
